# EUROPÄISCHE PATENTSCHRIFT

(11) **EP 3 492 238 B1**
(45) Veröffentlichungstag und Bekanntmachung des Hinweises auf die Patenterteilung: **10.06.2020**
(21) Anmeldenummer: 17205164.1
(22) Anmeldetag: 04.12.2017
(51) Int. Cl.: B29C 51/44, B26F 1/14, B29C 51/26, B29C 51/22

(54) **THERMOFORMAUTOMAT**
THERMOFORMING MACHINE
MACHINE DE THERMOFORMAGE

(43) Veröffentlichungstag der Anmeldung: 05.06.2019
(73) Patentinhaber: Gabler Thermoform GmbH & Co. KG, 23568 Lübeck (DE)
(72) Erfinder: Grolla, Peter, 23562 Lübeck (DE)
(74) Vertreter: Grosse, Wolf-Dietrich Rüdiger

(56) Entgegenhaltungen:
- EP-A1- 2 251 181
- DE-A1-102015 222 455

## Beschreibung

Die Erfindung betrifft einen Thermoformautomat zum Herstellen von Artikeln aus einer erwärmten thermoplastischen Kunststofffolienbahn, umfassend eine Formstation mit einem formenden und ausstanzenden, ein Oberwerkzeug und ein Unterwerkzeug aufweisenden Formwerkzeug, bei dem das Unterwerkzeug auf einem in eine Öffnungs- und eine Schließrichtung verstellbaren Werkzeugtisch und auf diesem um eine horizontale Achse verschwenkbar angeordnet ist, eine sich der Formstation in Foliendurchlaufrichtung anschließende, die ausgestanzten Artikel aus dem gekippten Unterwerkzeug mittels Saugdornen ergreifende Entnahmeeinrichtung, aus der die Artikel einer Lochstanze zugeführt werden, wobei die Lochstanze ein heb- und senkbar angetriebenes, Lochstempel besitzendes Oberstanzwerkzeug und ein die Artikel aufnehmendes Stanzunterwerkzeug aufweist, und eine der Lochstanze nachgeschaltete Stapelstation.

Ein solcher Thermoformautomat, bei dem die Folienbahn zum Formen, Stanzen und Stapeln der Artikel über einen intermittierenden Folientransport zunächst in die Formstation, daran anschließend in die Lochstanzstation und letztlich in die in der Regel als Standard-Stapel- und Zählvorrichtung ausgebildete Stapelstation gelangt, ist aus der DE 10 2015 222 455 A1 bekannt. Wenn in der Formstation nicht mit einem kombinierten Form- und Stanzwerkzeug gearbeitet wird, ergibt sich eine Produktionslinie mit vier aufeinander folgenden Stationen, nämlich Formen der Artikel in der Formstation, Stanzen der Löcher bzw. Öffnungen in der Lochstanzstation, Ausstanzen der Kontur in der Ausstanzstation und das Abstapeln der fertigen Artikel in der Stapelstation. Das Formwerkzeug kann einreihig oder mit in mehreren Reihen angeordneten Formnestern bzw. Kavitäten ausgebildet werden. Das gilt so gleichermaßen für die Lochstanze, die ebenfalls ein- oder mehrreihige Lochstanzwerkzeuge, insbesondere Lochstempel bzw. Schnittstempel oder dergleichen Schneidmittel aufweisen kann. Eine Lochstanze für Kunststoffbahnen oder andere flexible Bahnen ist beispielsweise aus der DE 295 18 952 U1 bekannt.

Für eine ohne eine Lochstanzstation betriebene Thermoformanlage, so dass sich der Formstation sogleich die Stapelstation anschließt, ist durch die DE 10 2004 050 917 A1 ein Formwerkzeug bekannt, dessen Unterwerkzeug zur Entnahme der geformten und ausgestanzten Artikel um eine horizontale Achse in eine in Folienlaufrichtung gekippte Stellung verschwenkt werden kann. Aus der Kippstellung werden die Artikel mittels Saugdornen bzw. Vakuumstäben einer linear verfahrbaren und um eine horizontale Achse verschwenkbaren Entnahmeeinrichtung ergriffen und nach dem Verschwenken und Abschalten des Unterdrucks abgestapelt. Die Anordnung solcher zwischen der Formstation und der Stapelstation verfahrbaren Entnahmeeinrichtungen in Form von Schwenk-Fangvorrichtungen bzw. Wendeplattenstaplern oder dergleichen die Artikel mit Saugdornen übernehmende und nach dem Schwenken weiterleitende Mittel sind auch aus der EP 2 251 181 B1 bekannt.

Die Integration einer Lochstanze in eine Produktionslinie wird dann erforderlich, wenn die hergestellten Artikel z. B. Schalen, Pflanzentöpfe, Kaffeekapseln oder dergleichen, mit Löchern versehen werden müssen. Dazu werden die in einem Thermoformautomat mit Kippwerkzeug geformten und gestanzten Artikel mittels Vakuum- bzw. Saugdornen aus dem gekippten Unterwerkzeug der Formstation entnommen und in Paletten eines Palettenförderers gesteckt. Die mit den zu lochenden Artikel bestückten Paletten werden dann mittels Ketten in die Lochstanze eingefördert. Nach dem Stanzen werden die gelochten Artikel zur Stapelstation bzw. Stapel- und Zählvorrichtung gefördert, wo die einzelnen Artikel aus den Paletten in eine Stapelplatte gestoßen, nach einer voreingestellten Anzahl in Stangen entnommen und mittels Stapelband per Hand abgepackt oder automatisch in einen Karton gelegt werden.

Abgesehen davon, dass aufgrund der Ketten- und Palettenförderung die Positionierung der Artikel in der Lochstanze schwierig ist, um eine hohe geforderte Präzision beim Stanzen der Löcher zu erzielen, ist weiterhin auch das Wechseln auf ein anderes Format sehr arbeits- und zeitintensiv. Denn um einen Werkzeugwerkwechsel durchzuführen, muss der komplette Kettenförderer mit den Paletten nach hinten verschoben werden, damit das Werkzeug aus der Formstation entnommen werden kann. Zusätzlich müssen zahlreiche Paletten (ca. 20) gewechselt werden. Nach dem Format- bzw. Werkzeugwechsel müssen dann alle Komponenten wieder in Linie ausgerichtet werden.

Der Erfindung liegt daher die Aufgabe zugrunde, die Betriebsweise eines gattungsgemäßen Thermoformautomaten zu verbessern, insbesondere eine hohe Genauigkeit der zu stanzenden Löcher zu ermöglichen und gleichzeitig den Formatwechsel zu vereinfachen.

Diese Aufgabe wird erfindungsgemäß dadurch gelöst, dass die Lochstanze mit einem um eine horizontale Achse verschwenkbaren, vorzugsweise auf einem Schwenktisch angeordneten, Stanzunterwerkzeug ausgebildet ist, das bei in Richtung auf die Entnahmeeinrichtung ausgeschwenkter Stellung die Artikel übernimmt und durch Zurückschwenken in die vertikale 0-Grad-Position in die Lochstanze einbringt.

Es lässt sich damit eine durch keinerlei Fördermittel beeinflusste, spielfreie Positionierung der Artikel in der Lochstanze erreichen. Da das erfindungsgemäße Stanzunterwerkzeug kipp- bzw. verschwenkbar ist, kann es die von den Saugdornen der Entnahmeeinrichtung übernommenen Artikel ohne Zwischenschaltung eines weiteren Förderers abnehmen. Hierdurch wird weiterhin der Formatwechsel wesentlich vereinfacht, insbesondere weil ein aufwendiger Palettenwechsel entfällt und kein Kettenförderer mehr vorschoben zu werden braucht.

Eine bevorzugte Ausführung der Erfindung sieht vor, dass bei Anordnung der Lochstanze in Linie mit der Formstation und der Stapelstation das Stanzunterwerkzeug sowohl entgegen der Folienlaurichtung als auch in Folienlaufrichtung verschwenkbar ist, vorzugsweise insgesamt um 180°, wobei zwischen der Formstation und der Lochstanze sowie in der Stapelstation hinter der Lochstanze jeweils eine Schwenk-Fangvorrichtung vorgesehen ist, von denen zumindest die sich der Formstation anschließende Schwenk-Fangvorrichtung auch linear verfahrbar ist. Das auch zur Stapelstation hin verschwenkbare Stanzunterwerkzeug ermöglicht es, dort ebenfalls die aus einer Kippstellung von etwa 80° bereitstehenden, mit den gestanzten Löchern versehenen Artikel mittels eines Wendeplattenstaplers bzw. einer Schwenk-Fangvorrichtung zu entnehmen, dann zu zählen und zu stapeln. Der gesamte Durchlauf der Artikel durch die in einer Produktionslinie aufeinander folgenden Stationen, d. h. von der Formstation bis zur Stapelstation, erfolgt hierbei ausschließlich durch Schwenkbewegungen, ergänzt durch die lineare Verfahrbarkeit der Schwenk-Fangvorrichtung zur Überwindung eines zu den einzelnen Stationen einzuhaltenden Sicherheitsabstandes bzw. zur Überbrückung von baubedingt notwendigen Abständen zwischen den einzelnen Stationen.

Eine andere Ausführung der Erfindung sieht vor, dass bei zu einer Seite aus der Linie versetzter Anordnung der Lochstanze, wobei deren Oberstanzwerkzeug und Stanzunterwerkzeug orthogonal zum Formwerkzeug der Formstation verlaufen, das Stanzunterwerkzeug nur in Richtung auf die Linie verschwenkbar ist, vorzugsweise um 90°, und die zwischen der Formstation und der Stapelstation angeordnete Entnahmeeinrichtung als eine auf einem um eine vertikale Achse drehbaren Traggestell linear verstellbar vorgesehene, mit Saugdornen bestückte Platten aufweisende Artikelhandhabungseinheit ausgebildet ist.

Die Lochstanze kann hierbei ohne ein um bis 180° verschwenkbares Stanzunterwerkzeug betrieben werden und statt einer Schwenk-Fangvorrichtung als Entnahmeeinrichtung ist zwischen der Formstation und der Stapelstation eine um eine vertikale Achse drehbare Artikelhandhabungseinheit vorgesehen. Durch die vertikale Drehbarkeit können sukzessive die Platten mit den Saugdornen vor das gekippte Unterwerkzeug der Formstation, das gekippte bzw. ausgeschwenkte Stanzunterwerkzeug und anschließend zur Übernahme in die Stapelstation vor die dortige Schwenk-Fangvorrichtung positioniert werden.

Nach einer bevorzugten Ausgestaltung bei aus der Linie versetzter Lochstanze weist die Artikelhandhabungseinheit vier im rechten Winkel zueinander angeordnete, unabhängig voneinander linear verstellbare Platten auf, von denen in von der Drehung des Traggestells vorgegebener Abfolge stets zwei in Folienlaufrichtung einander gegenüberliegende Platten einerseits der Formstation und andererseits der Stapelstation zugewandt sind, während eine der beiden anderen Platten der Lochstanze zugewandt ist und die verbleibende Platte eine Warteposition einnimmt. Es ist damit ein zwar von der Taktzahl des Herstellungsprozesses bestimmter, jedoch für die Zuführung der Artikelreihen in die einzelnen Stationen ununterbrochener Betrieb möglich. Während nämlich die eine Platte mit ihren Saugdornen vor der Formstation steht, können die von den Saugdornen der zuvor vor der Lochstanze positionierten Platte abgenommenen Artikel in das gekippte Stanzunterwerkzeug ausgestoßen werden und die Saugdorne der vor die Stapelstation gedrehten Platte können die zuvor aus der Lochstanze entnommenen Artikel in die Stapelstation überleiten. Beim folgenden Takt gelangt dann mit der Drehung der Artikelhandhabungseinheit die Platte aus der Warteposition mit ihren Saugdornen vor die Formstation. Dieses Wechselspiel mit den sich entsprechend der Drehung verlagernden Platten wiederholt sich mit jedem Takt.

Weitere Merkmale und Einzelheiten der Erfindung ergeben sich aus den Ansprüchen und der nachfolgenden Beschreibung von in den Zeichnungen schematisch dargestellten Ausführungsbeispielen der Erfindung. Es zeigen:
- Fig. 1: von einer Thermoformmaschine die Formstation mit noch geöffnetem, aus zwei Hälften - Ober- und Unterwerkzeug - bestehendem Werkzeug;
- Fig. 2: ein erstes Anlagenkonzept eines Thermoformautomaten, bei dem in einer Linie eine Formstation, im Abstand davon eine Lochstanze und sich dieser anschließend eine Stapelstation angeordnet sind; und
- Fig. 3: ein zweites Anlagenkonzept, bei dem die Lochstanze aus der Linie von Form- und Stapelstation zu einer Seite hin versetzt angeordnet ist.

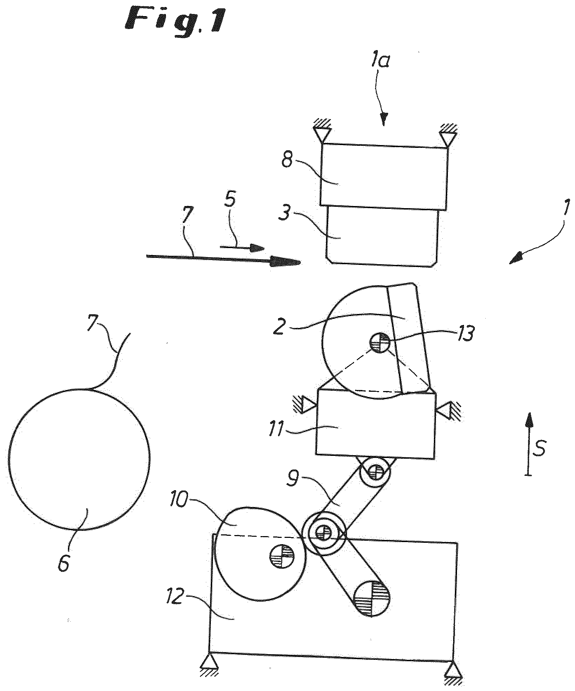

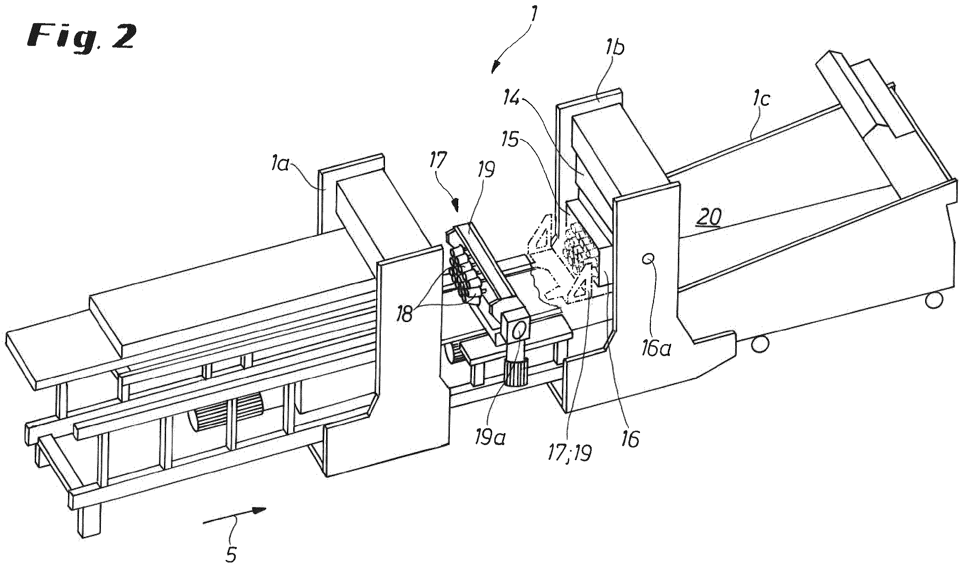

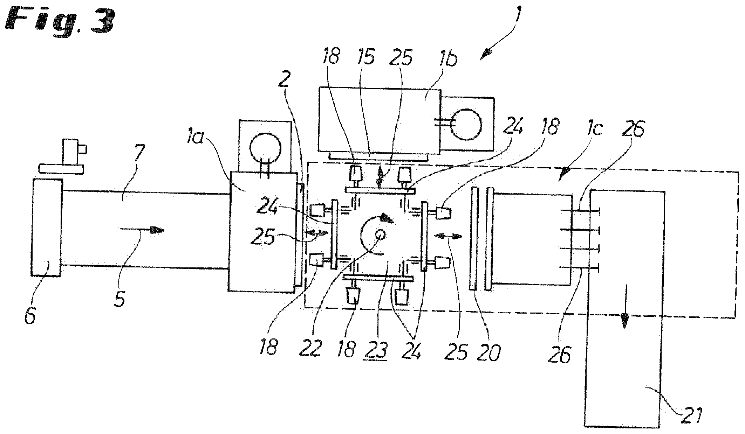

Als Einzelheit eines Thermoformautomaten (vgl. Fig. 2 und 3) ist in Fig. 1 dessen Formstation 1a dargestellt. Diese weist ein zweiteiliges, formendes und ausstanzendes, aus einem Unterwerkzeug 2 und einem Oberwerkzeug 3 bestehendes Formwerkzeug 4 auf, in das zum Herstellen von tiefgezogenen, beliebigen Artikeln wie Schalen, Becher oder Töpfe, in Folienlaufrichtung 5 eine zuvor erwärmte, z. B. von einer Rolle 6 abgewickelte Kunststofffolienbahn 7 intermittierend einläuft, wie in Fig. 1 angedeutet.

Das Oberwerkzeug 3 ist an einem ortsfesten Oberjoch 8 befestigt, während das Unterwerkzeug 2 als bewegliche Werkzeughälfte ausgeführt ist, die sich relativ zum Oberwerkzeug 3 verlagert, wobei eine kombinierte translatorische und schwenkende Bewegung zum Einsatz kommt, um nach dem Ausformen und - stanzen der Artikel diese einfacher entnehmen und abführen zu können. Die Bewegung des Unterwerkzeugs 2 wird von einem Kniehebel 9 bewerkstelligt, an dem eine Kurvenscheibe 10 ansitzt. Durch diesen Bewegungsmechanismus wird ein Unter- bzw. Werkzeugtisch 11, auf dem das Unterwerkzeug 2 angebracht ist, relativ zu einem Unterjoch 12 bewegt. Bei der Bewegung der Kurvenscheibe 10 wird demgemäß das Formwerkzeug 4 bzw. dessen Unter- und Oberwerkzeug 2, 3 geöffnet bzw. geschlossen; die Werkzeugschließrichtung ist mit S angegeben.

Das Ausschwenken des in einer oder in mehreren Reihen entsprechend der Anzahl der herzustellenden Artikel entsprechende Formnester aufweisenden Unterwerkzeugs 2 in eine wie in Fig. 1 dargestellte gekippte Entnahmestellung erfolgt über eine horizontale Drehachse 13.

Ein Thermoformautomat zum Herstellen von außerdem mit Löchern versehenen Artikeln weist im Anschluss an die Formstation 1a weiterhin eine Lochstanze 1b auf, der nachfolgend eine Stapelstation 1c zugeordnet ist, die wie eine ansonsten direkt der Formstation nachgeschaltete, hinlänglich bekannte, Stapel- und Zählvorrichtung ausgebildet sein kann (vgl. die Fig. 2 und 3).

Die Lochstanze 1b ist mit einem heb- und senkbaren, eine der Anzahl der Artikel entsprechende Zahl von Loch- bzw. Schnittstempeln aufweisenden beweglichen Oberstanzwerkzeug 14 und einem Stanzunterwerkzeug 15 ausgebildet, das übereinstimmend mit den Reihen der Formnester des Unterwerkzeugs 2 der Formstation 1a ein- oder mehrreihige, wie im Ausführungsbeispiel der Fig. 2 zu erkennen, Artikelaufnahmen aufweist. Das Stanzunterwerkzeug 15 ist auf einem um eine horizontale Achse 16a verschwenkbaren Schwenktisch 16 angeordnet, d. h. der Schwenktisch 16 mit dem Stanzunterwerkzeug 15 bildet das Gegenwerkzeug für das sich mit den Lochstempeln hebende und senkende Oberstanzwerkzeug 14.

Bei der Ausführung des Thermoformautomaten 1 nach Fig. 2 sind die Formstation 1a, die Lochstanze 1b und die Stapelstation 1c in einer Linie angeordnet. Zur Übernahme der ausgeformten und ausgestanzten Artikel aus dem wie in Fig. 1 dargestellt in eine gekippte Stellung verschwenkten Unterwerkzeug 2 der Formstation 1a, ist dieser nachfolgend und der Lochstanze 1b somit vorgeschaltet eine linear verfahrbare Schwenk-Fangvorrichtung 17 zugeordnet. Deren mit mehrreihigen Saugdornen 18, wie durch die Anzahl der Formnester des Unterwerkzeugs 2 vorgegeben, bestückte Wendeplatte 19 ist um bis 180° um eine horizontale Achse 19a verschwenkbar.

In der gezeigten Übernahmeposition sind die Saugdorne 18 auf das Unterwerkzeug der Formstation 1a ausgerichtet. Nach der Übernahme der Artikel wird die Wendeplatte 19 um 180° verschwenkt, so dass die Saugdorne 18 mit den aufgenommenen Artikeln auf das mit ihren Aufnahmen um 90° entgegen der Folienlaufrichtung 5 verschwenkte Stanzunterwerkzeug 15 weisen. Die Schwenk-Fangvorrichtung 17 wird dann in Richtung auf das Stanzunterwerkzeug 15 verfahren, so dass anschließend die Artikel in die Aufnahmen des Stanzunterwerkzeugs 15 ausgestoßen werden können. Das Stanzunterwerkzeug 15 mit den aufgenommenen Artikeln wird dann zum Stanzen um 90° in exakt die 0-Grad-Ausgangsposition zurück geschwenkt, in der die Löcher mit einer 100-prozentigen Genauigkeit ausgestanzt werden können. Sobald das Ausstanzen beendet ist, wird das Oberstanzwerkzeug 14 angehoben und das Stanzunterwerkzeug 15 in Folienlaufrichtung 5 um etwa 80° zur Stapelstation 1c hin verschwenkt, wo die gelochten fertigen Artikel von einer dort vorgesehenen Schwenk-Fangvorrichtung bzw. einen Wendeplattenstapler 20 übernommen und zur Zählung und Stapelung sowie ggf. Abtransport auf einem Förderband 21 (vgl. Fig. 3) abgegeben werden.

Der in Fig. 3 dargestellte Thermoformautomat 1 unterscheidet sich von der zuvor beschriebenen Ausführung dadurch, dass die Lochstanze 1b nicht mehr in einer Linie mit den übrigen Anlagenteilen angeordnet ist, sondern zu einer Seite aus der Linie versetzt vorgesehen ist und das Stanzunterwerkzeug 15 nicht mehr um 180°, sondern nur um 90° in Richtung auf die Produktionslinie verschwenkt zu werden braucht. Weiterhin ist die Entnahmeeinrichtung 17 nicht mehr um 180° verschwenkbar, vielmehr als eine auf einem um eine vertikale Achse 22 drehbaren Traggestell 23 linear verstellbar vorgesehene, mit den Saugdornen 18 bestückte Platten 24 aufweisende Artikelhandhabungseinheit ausgebildet. Es sind hierbei vier Platten im rechten Winkel zueinander angeordnet und unabhängig voneinander auf dem Traggestell 23 linear verstellbar, wie durch die Doppelpfeile 25 angedeutet.

Im Betrieb des Thermoformautomaten 1 läuft die von der Rolle 6 abgewickelte Folienbahn mit Erwärmung durch eine Heizeinrichtung in Folienlaufrichtung 5 in die Formstation 1a ein, dessen Unterwerkzeug 2 nach dem Formen und Ausstanzen der Artikel durch Verschwenken in Richtung auf die Entnahmeeinrichtung 17 in eine Kippstellung gebracht wird. Die der Formstation 1a zugewandte Platte 24 wird linear verfahren und übernimmt mit ihren Saugdornen 18 die Artikel. Durch Drehen des Traggestells 23 gelangt diese Platte vor die seitlich aus der Linie versetzte Lochstanze 1b, deren Stanzunterwerkzeug 15 in seiner um 90° in Richtung auf die Platte 24 ausgeschwenkten Stellung die von den Saugdornen 18 ausgestoßenen Artikel übernimmt. Zum Stanzen der Löcher wird das Stanzunterwerkzeug 15 in die vertikale 0°-Position in die Lochstanze zum Stanzen der Löcher zurückgeschwenkt. Mit Beendigung des Lochstanzens wird das Oberstanzwerkzeug 14 der Lochstanze 1b abgehoben, das Stanzunterwerkzeug wieder um 90° in Richtung auf die Entnahmeeinrichtung 17 verschwenkt, so dass die gelochten Artikel von den Saugdornen 18 der bereitstehenden Platte 24 übernommen und durch Drehung des Traggestells 23 vor die Schwenk-Fangvorrichtung 20 der Stapelstation 1c verbracht werden können. Nach dem die Saugdorne der Schwenk-Fangvorrichtung 20 die Artikel übernommen haben, schwenkt diese in Folienlaufrichtung 5 und leitet die Artikel in die Stapelstation 1c über, wo die Artikel zu Stangen ineinandergestapelt und mittels in Fig. 3 angedeuteten Abschiebern 26 auf ein Förderband 21 abgeschoben werden können.

Da den drei Stationen des Thermoformautomaten 1 vier Platten 24 mit Saugdornen 18 zugeordnet sind, steht mit jeder Drehung des Traggestells 23 stets eine Platte vor der Formstation 1a, der Lochstanze 1b und der Stapelstation 1c, während die verbleibende vierte Platte eine Warteposition einnimmt. Es wird hiermit ein nur durch die Form- und Lochstanztakte unterbrochener, ansonsten kontinuierlicher Prozessablauf erreicht, wobei die Taktfolge statt von der Formstation 1a von der Lochstanze 1b vorgegeben werden kann.

### Bezugszeichenliste

- 1: Thermoformautomat
- 1a: Formstation
- 1b: Lochstanze
- 1c: Stapelstation
- 2: Unterwerkzeug
- 3: Oberwerkzeug
- 4: Formwerkzeug
- 5: Folienlaufrichtung
- 6: Rolle
- 7: Folienbahn
- 8: Oberjoch
- 9: Kniehebel
- 10: Kurvenscheibe
- 11: Unter-/Werkzeugtisch
- 12: Unterjoch
- 13: horizontale Drehachse
- 14: bewegliches Oberstanzwerkzeug
- 15: Stanzunterwerkzeug
- 16: Schwenktisch
- 16a: horizontale Achse
- 17: Schwenk-Fangvorrichtung bzw. Wendeplattenstapler/Entnahmeeinrichtung
- 18: Saugdorn
- 19: Wendeplatte
- 19a: horizontale Achse
- 20: Schwenk-Fangvorrichtung / Wendeplattenstapler
- 21: Förderband
- 22: vertikale Achse
- 23: drehbares Traggestell
- 24: Platte
- 25: Doppelpfeil lineare Verstellung
- 26: Abschieber

- S: Schließrichtung

## Patentansprüche

1. Thermoformautomat (1) zum Herstellen von Artikeln aus einer erwärmten thermoplastischen Kunststofffolienbahn, umfassend eine Formstation (1a) mit einem formenden und ausstanzenden, ein Oberwerkzeug (3) und ein Unterwerkzeug (2) aufweisenden Formwerkzeug (4), bei dem das Unterwerkzeug (2) auf einem in einer Öffnungs- und eine Schließrichtung (S) verstellbaren Werkzeugtisch (11) und auf diesem um eine horizontale Achse (13) verschwenkbar angeordnet ist, eine sich der Formstation (1a) in Folienlaufrichtung (5) anschließende, die ausgestanzten Artikel aus dem gekippten Unterwerkzeug (2) mittels Saugdornen (18) ergreifende Entnahmeeinrichtung (17), aus der die Artikel einer Lochstanze (1b) zugeführt werden, wobei die Lochstanze (1b) ein heb- und senkbar angetriebenes, Lochstempel besitzendes Oberstanzwerkzeug (14) und ein die Artikel aufnehmendes Stanzunterwerkzeug (15) aufweist, und eine der Lochstanze (1b) nachgeschaltete Stapelstation (1c),
**dadurch gekennzeichnet,**
**dass** die Lochstanze (1b) mit einem um eine horizontale Achse (16a) verschwenkbaren Stanzunterwerkzeug (15) ausgebildet ist, dass bei in Richtung auf die Entnahmeeinrichtung (17) ausgeschwenkter Stellung die Artikel übernimmt und durch Zurückschwenken in die vertikale 0°-Grad-Position in die Lochstanze (1b) einbringt.

2. Thermoformautomat nach Anspruch 1,
**dadurch gekennzeichnet,**
**dass** das Stanzunterwerkzeug (15) auf einem Schwenktisch (16) angeordnet ist.

3. Thermoformautomat nach Anspruch 1 oder 2,
**dadurch gekennzeichnet,**
**dass** bei Anordnung der Lochstanze (1b) in Linie mit der Formstation (1a) und der Stapelstation (1c) das Stanzunterwerkzeug (15) sowohl entgegen der Folienlaufrichtung (5) als auch in Folienlaufrichtung (5) verschwenkbar ist, vorzugsweise insgesamt um 180°, wobei zwischen der Formstation (1a) und der Lochstanze (1b) sowie in der Stapelstation (1c) hinter der Lochstanze (1b) jeweils eine Schwenk-Fangvorrichtung (17; 20) vorgesehen ist, von denen zumindest die sich der Formstation (1a) anschließende Schwenk-Fangvorrichtung (17) auch linear verfahrbar ist.

4. Thermoformautomat nach Anspruch 1 oder 2,
**dadurch gekennzeichnet,**
**dass** bei zu einer Seite aus der Linie versetzter Anordnung der Lochstanze (1b), wobei deren Oberstanzwerkzeug (14) und Stanzunterwerkzeug (15) orthogonal zum Formwerkwerkzeug (4) der Formstation (1a) verlaufen, das Stanzunterwerkzeug (15) nur in Richtung auf die Linie verschwenkbar ist, vorzugsweise um 90°, und die zwischen der Formstation (1a) und der Stapelstation (1c) angeordnete Entnahmeeinrichtung (17) als eine auf einem um eine vertikale Achse (22) drehbaren Traggestell (23) linear verstellbar vorgesehene, mit Saugdornen (18) bestückte Platten (24) aufweisende Artikel Handhabungseinheit ausgebildet ist.

5. Thermoformautomat nach Anspruch 4,
**dadurch gekennzeichnet,**
**dass** die Artikelhandhabungseinheit vier im rechten Winkel zueinander angeordnete, unabhängig voneinander linear verstellbare Platten (24) aufweist, von denen in von der Drehung des Traggestells (23) vorgegebener Abfolge stets die zwei in Folienlaufrichtung (5) einander gegenüberliegenden Platten einerseits der Formstation (1a) und andererseits der Stapelstation (1c) zugewandt sind, während eine der beiden anderen Platten der Lochstanze (1b) zugewandt ist und die verbleibende Platte eine Warteposition einnimmt.

## Claims

1. An automatic thermoforming machine (1) for manufacturing articles from a heated thermoplastic film, comprising a molding station (1a) with a molding and punching tool (4) that has an upper tool (3) and a lower tool (2), wherein the lower tool (2) is arranged on a tool table (11), which can be adjusted in an opening and a closing direction (S), so as to be pivotable about a horizontal axis (13) on this tool table, an extraction device (17) that is arranged downstream of the molding station (1a) referred to the film travel direction (5) and extracts the punched-out articles from the tilted lower tool (2) by means of suction mandrels (18), a hole punch (1b), to which the articles are fed from the extraction device (17), wherein the hole punch (1b) has an upper punching tool (14) that is driven in a raising and lowering manner and fitted with hole punching dies, as well as a lower punching tool (15) that accommodates the articles, and a stacking station (1c) that is arranged downstream of the hole punch (1b),
**characterized in**
**that** the hole punch (1b) is realized with a lower punching tool (15), which is pivotable about a horizontal axis (16a), wherein said lower punching tool receives the articles in a position, in which it is pivoted in the direction of the extraction device (17), and introduces the articles into the hole punch (1b) by pivoting back into the vertical 0° position.

2. The automatic thermoforming machine according to claim 1,
**characterized in**
**that** the lower punching tool (15) is arranged on a pivot table (16).

3. The automatic thermoforming machine according to claim 1 or 2,
**characterized in**
**that** the lower punching tool (15) can be pivoted opposite to the film travel direction (5), as well as in the film travel direction (5), preferably by a total of 180°, when the hole punch (1b) is arranged in line with the molding station (1a) and the stacking station (1c), wherein a pivotable catching device (17, 20) is respectively provided between the molding station (1a) and the hole punch (1b), as well as in the stacking station (1c) downstream of the hole punch (1b), and wherein at least the pivotable catching device (17) arranged downstream of the molding station (1a) can also be linearly displaced.

4. The automatic thermoforming machine according to claim 1 or 2,
**characterized in**
**that** the lower punching tool (15) can only be pivoted in the direction of the line, preferably by 90°, when the hole punch (1b) is arranged offset to the line toward one side and its upper punching tool (14) and lower punching tool (15) extend orthogonal to the molding tool (4) of the molding station (1a), and in that the extraction device (17) arranged between the molding station (1a) and the stacking station (1c) is realized in the form of an article handling unit that has plates (24) fitted with suction mandrels (18) and is arranged on a support frame (23), which is rotatable about a vertical axis (22), in a linearly adjustable manner.

5. The automatic thermoforming machine according to claim 4,
**characterized in**
**that** the article handling unit has four plates (24) that are arranged at a right angle relative to one another and can be linearly adjusted independently of one another, wherein the two plates, which lie opposite of one another in the film travel direction (5), always face the molding station (1a) on the one hand and the stacking station (1c) on the other hand while one of the two other plates faces the hole punch (1b) and the remaining plate assumes a waiting position referred to the sequence defined by the rotation of the support frame (23).

## Revendications

1. Automate de thermomoulage (1) pour fabriquer des articles à partir d'un lé de film plastique thermoplastique chauffé, comprenant un poste de moulage (1a) avec un outil de moulage (4) de moulage et d'estampage, présentant un outil supérieur (3) et un outil inférieur (2), dans lequel l'outil inférieur (2) est disposé sur une table d'outil (11) réglable dans un sens d'ouverture et de fermeture (S) et est disposé sur celle-ci en pouvant pivoter sur un axe longitudinal (13), un dispositif d'enlèvement (17) se raccordant au poste de moulage (1a) dans le sens d'avance des films (5), enlevant les articles estampés hors de l'outil inférieur (2) basculé au moyen de mandrins d'aspiration (18), à partir duquel les articles sont dirigés vers un emporte-pièces (1b), dans lequel l'emporte-pièces (1b) présente un outil d'estampage supérieur (14) levable et abaissable, possédant un poinçon d'estampage, et un sous-outil d'estampage (15) recevant les articles, et un poste d'empilement (1c) monté en aval de l'emporte-pièces (1b),
**caractérisé en ce que**
l'emporte-pièces (1b) est conçu avec un sous-outil d'estampage (15) pouvant pivoter sur un axe horizontal (16a), qu'en position basculée en direction du dispositif d'enlèvement (17), prend les articles et par rebascule dans la position verticale à 0°, place les articles dans l'emporte-pièces (1b).

2. Automate de thermomoulage selon la revendication 1,
**caractérisé en ce que**
le sous-outil d'estampage (15) est disposé sur une table pivotante (16).

3. Automate de thermomoulage selon la revendication 1 ou 2,
**caractérisé en ce que**
lors de l'agencement de l'emporte-pièces (1b) en ligne avec le poste de moulage (1a) et le poste d'empilement (1c), le sous-outil d'estampage (15) est tant pivotable contre le sens d'avance des films (5) que dans le sens d'avance des films (5), de préférence de 180° en tout, dans lequel entre le poste de moulage (1a) et l'emporte-pièces (1b) ainsi dans le poste d'empilement (1c) derrière l'emporte-pièces (1b), respectivement un dispositif de collecte pivotant (17 ; 20) respectif est prévu, desquels au moins le dispositif de collecte pivotant (17) se raccordant au poste de moulage (1a) peut être déplacé de manière linéaire.

4. Automate de thermomoulage selon la revendication 1 ou 2,
**caractérisé en ce que**
lors de l'agencement de l'emporte-pièces (1b) décalé sur un côté hors de la ligne, dans lequel son outil d'estampage supérieur (14) et son sous-outil d'estampage (15) sont orthogonaux à l'outil de moulage (4) du poste de moulage (1a), le sous-outil d'estampage (15) peut pivoter uniquement en direction de la ligne, de préférence de 90°, et le dispositif d'enlèvement (17) disposé entre le poste de moulage (1a) et le poste d'empilement (1c) est conçu en tant qu'unité de manutention des articles prévue réglable de manière linéaire sur un bâti porteur (23) rotatif sur un axe vertical (22), présentant des plaques (24) dotées de mandrins de préhension (18).

5. Automate de thermomoulage selon la revendication 4,
**caractérisé en ce que**
l'unité de manutention des articles présente quatre plaques (24) réglables de manière linéaire indépendamment l'une de l'autre, disposées à angle droit l'une par rapport à l'autre, desquelles, dans une suite prédéfinie par la rotation du bâti porteur (23), les deux plaques qui se font face l'une à l'autre dans le sens d'avance des films (5) sont toujours tournées d'une part vers le poste de moulage (1a) et d'autre part vers le poste d'empilement (1c), tandis qu'une des deux autres plaques est tournée vers l'emporte-pièces (1b) et la plaque restante adopte une position d'attente.
